**Europäisches Patentamt**

**European Patent Office**

**Office européen des brevets**

(19)

(11) Veröffentlichungsnummer: **0 012 355**
A1

(12) # EUROPÄISCHE PATENTANMELDUNG

(21) Anmeldenummer: **79104944.8**

(22) Anmeldetag: **05.12.79**

(51) Int. Cl.³: **C 08 F 291/02**
// (C08F291/02, 212/04, 220/12, 220/44)

(30) Priorität: **12.12.78 DE 2853570**

(43) Veröffentlichungstag der Anmeldung: **25.06.80**
**Patentblatt 80/13**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Müller, Eberhard, Dr., Hermann-Hesse-Strasse 7, D-5090 Leverkusen (DE)**
Erfinder: **Ott, Karl-Heinz, Dr., Paul-Klee-Strasse 54, D-5090 Leverkusen (DE)**
Erfinder: **Pampus, Gottfried, Dr., Friedrich-Weskott-Strasse 14, D-5090 Leverkusen (DE)**
Erfinder: **Schnetger, Jochen, Dr., c/o Metzeler Kautschuk AG Postfach 1640, D-8990 Lindau(Bodensee) (DE)**

(54) **Vernetzte thermoplastisch-elastomere Pfropfpolymerisate.**

(57) Thermoplastisch-elastomere Pfropfpolymerisate aus einem unvernetzten Kautschuk als Pfropfbasis, der während der Pfropfung vernetzt wird und einem Thermoplastanteil von mindestens teilweise aufgepfropften Einheiten eines Vinylaromaten, eines Alkylmethacrylats oder Acrylnitril oder deren Gemischen.

EP 0 012 355 A1

BAYER AKTIENGESELLSCHAFT          5090 Leverkusen,Bayerwerk
Zentralbereich                    Kb/bc
Patente, Marken und Lizenzen

Vernetzte thermoplastisch-elastomere Pfropfpolymerisate

Die vorliegende Anmeldung betrifft thermoplastische elastomere Pfropfpolymerisate aus einem während
der Pfropfung vernetzten Kautschuk als Pfropfbasis und
einem Thermoplastanteil von mindestens teilweise aufgepfropften Einheiten eines Vinylaromaten, eines Alkylmethacrylats oder Acrlynitril oder deren Gemischen.

Bereits bekannte thermoplastisch verarbeitbare Elastomere
sind z.B. Styrol-Butadien-Dreiblockcopolymere (US-Patent
3 265 765). Sie können u.a. entweder durch Umsetzung von
Dilithiumpolybutadienen mit Styrol oder durch Verknüpfen
von Polystyrol-Polybutadienyl-Lithium-Diblockpolymeren
mit geeigneten di- oder mehrfunktionellen Verbindungen
erhalten werden.

Le A 17 671- Europa

- 2 -

Unterhalb der Glastemperatur des Polystyrols zeigen diese Polymere technologische Eigenschaften, die mit denen konventionell hergestellter Kautschukvulkanisate vergleichbar sind. Sie besitzen bei Raumtemperatur ein gutes elastisches Verhalten und hohe Festigkeitswerte bei variablen Härte-Einstellungen. Bei Temperaturen oberhalb des Glasübergangs von Polystyrol befinden sich diese Produkte in einem schmelzähnlichen Zustand und lassen sich wie unvulkanisierte Kautschuke verarbeiten, wobei der Übergang vom kautschuk- zum vulkanisatähnlichen Zustand reversibel ist. Morphologisch gesehen bestehen diese Polymeren aus einer Kautschukmatrix,in welche die damit chemisch verknüpften Polystyroleinheiten ("glassy balls") eingelagert sind.

Ein wesentlicher Nachteil derartiger Systeme besteht in ihrer geringen Wärmestandfestigkeit, die durch eine gewisse Teilverträglichkeit der Polystyroleinheiten mit der Polybutadienmatrix bedingt ist. So beginnen z.B. die Polystyrolblöcke der Dreiblockelastomeren bereits oberhalb von 60°C zu erweichen. Außerdem muß bei den üblichen Herstellungsverfahren äußerst sorgfältig gearbeitet werden, da die Festigkeiten z.B. bereits durch geringe Anteile an Polystyrol-Polybutadien-Diblöcken, die durch Abbruchreaktionen mit Verunreinigungen leicht entstehen können, erheblich abfallen.

Bekannt sind außerdem thermoplastische Elastomere, die durch Abmischung von isotaktischem Polypropylen oder Polyethylen mit mehr oder weniger stark vernetzten Ethylen-Propylen-Dien-Terpolymeren oder durch Abmischung

Le A 17 671

- 3 -

von modifiziertem Polyisobutylen mit Polyethylen hergestellt werden (US-Patente 3 758 643, 3 806 558, 3 835 201
und 3 862 106).

Man nimmt an, daß diese Produkte ihre spezifischen Eigenschaften dadurch erhalten, daß sich Thermoplast- und
Kautschukanteile durch Verknäuelungen oder Verhakungen
miteinander verknüpfen. Bei diesen Produkten ist die
Festigkeits-Bruchdehnungs-Relation ungünstig, auch haben sie für bestimmte Anwendungen zu niedrige Elastizität bei tiefen Temperaturen.

Weiterhin bekannt sind Pfropfpolymerisate aus Dienkautschuken und Styrol, Styrol/Acrylnitril und Styrol/Acrylnitril/Acrylestern, die eine kugelförmige Verteilung
von Kautschukteilchen in einer Harzmatrix aufweisen. Sie
zeigen jedoch eine ungünstige Festigkeits-Bruchdehnungs-
Relation, haben eher thermoplastische als elastische
Eigenschaften und werden zur Schlagfestmachung von Kunststoffen wie Polystyrol, Polycarbonat oder Styrol-Acrylnitril-Copolymerisaten verwendet.

Es wurde nun gefunden, daß Kautschukpfropfpolymerisate
aus 50 bis 75, vorzugsweise 60 bis 70 Gew.-% Kautschuk
der während der Pfropfung zu 50 bis 100 Gew.-% vernetzt
wird und einem Thermoplastanteil von 25 bis 50, vorzugsweise von 30 bis 40 Gew.-%, die durch Polymerisation eines
Vinylaromaten, eines Alkylmethacrylats oder Acrylnitril
oder deren Gemischen in Gegenwart eines Kautschuks erhalten werden, thermoplastische Elastomere darstellen,

Le A 17 671

- 4 -

die gleichzeitig hohe Wärmestandfestigkeit, gute Kälteflexibilität und günstige Festigkeits-Dehnungs-Relationen besitzen.

Gegenstand der Erfindung sind thermoplastisch-elastomere
Pfropfpolymerisate aus

a) 50 bis 75 Gew.-% eines unvernetzten Kautschuks als
   Pfropfbasis, der während der Pfropfung zu 50 bis 100
   Gew.-% vernetzt wird und

b) 25 bis 50 Gew.-% eines Thermoplastanteils aus polymerisierten Einheiten eines Vinylaromaten, eines Alkylmethacrylats oder Acrylnitril oder deren Gemischen, die
   zu 30 bis 90, vorzugsweise zu 50 bis 90 Gew.-% aufgepfropft sind.

Durch Variation des Kautschuk-Thermoplast-Verhältnisses
sowie des bei der Pfropfung sich einstellenden Vernetzungsgrades kann man einen großen Härtebereich (Shore A
bei Raumtemperatur 20 bis 100) einstellen, ohne die Zugfestigkeits-Dehnungs-Relation für einen sehr breiten Anwendungsbereich ungünstig zu beeinflussen.

Als Pfropfgrundlage können Natur- und Synthesekautschuke
verwendet werden. Geeignete Synthesekautschuke sind Homo-
und Copolymerisate von gegebenenfalls halogensubstituierten
konjugierten Dienen mit 4 bis 8 Kohlenstoffatomen wie Butadien, Isopren und Chloropren und deren Copolymerisate
mit Styrol oder Acrylnitril. Beispielhaft seien genannt:
Polybutadien, Polyisopren, Polychloropren, Acrylnitril-
Butadien- und Styrol-Butadien-Copolymere. Weitere als
Pfropfgrundlage geeignete Synthesekautschuke sind Ethylen-Vinylacetat-Copolymere mit einem Vinylacetatgehalt
von 30 bis 98 Gew.-%, Ethylen-Propylen-Copolymere und
Terpolymere von Ethylen und Propylen, z.B. mit Ethyliden-

Le A 17 671

- 5 -

norbornen und Dicyclopentadien. Bevorzugt sind Polybutadien, Butadien-Styrol- und Butadien-Acrylnitril-Copolymere,
Ethylen-Propylen-Terpolymere oder deren Gemische und Ethylen-
Vinylacetat-Copolymere. Bevorzugte Gemische bestehen aus
10 bis 90 Gew.-% Butadien-Styrol-Copolymer und 10 bis 90
Gew.-% Butadien-Acrylnitril-Copolymer, aus 10 bis 90 Gew.-%
Polybutadien und 10 bis 90 Gew.-% Butadien-Acrylnitril-
Copolymer oder aus 10 bis 90 Gew.-% Polybutadien und 10
bis 90 Gew.-% Ethylen-Propylen-Terpolymer.

Als Pfropfmonomere geeignete Vinylaromaten sind Styrol
und $C_1$-$C_4$-Alkylderivate des Styrols mit insgesamt 8 bis
12 Kohlenstoffatomen wie α-Methylstyrol und p-Methylstyrol. Geeignete Alkylmethacrylate sind Ester der Methacrylsäure mit aliphatischen $C_1$-$C_4$-Alkoholen wie Methyl-, Ethyl-
n-Propyl- und Isobutylmethacrylat. Bevorzugt als Pfropfmonomere sind Styrol, Methylmethacrylat oder Acrylnitril
und Acrylnitril-Styrol- oder Acrylnitril-Methylmethacrylat-
Gemische.

Die erfindungsgemäßen thermoplastisch-elastomeren Pfropfpolymerisate können in an sich bekannter Weise, z.B. durch
radikalische Polymerisation in Emulsion, Lösung oder nach
Lösungs-Fällungs-Verfahren hergestellt werden. Bei der radikalischen Pfropfung in Emulsion werden die Reaktionsbedingungen nach den üblichen Regeln der Emulsionspolymerisation ausgewählt (D.C. Blakeliy, Emulsion Polymerisation,
Theory and Practice, Applied Science Publishers Ltd.,
London 1975). Die zur Pfropfung in Emulsion verwendeten
Kautschuklatices können Teilchengrößen zwischen 50 und
800 nm haben, bevorzugt sind 100 bis 400 nm. Der Gelgehalt der Kautschuke kann zwischen 0 und 30 Gew.-% liegen.

Le A 17 671

- 6 -

Vorzugsweise werden Gemische aus 60 Gew.-% oder mehr eines Kautschuks mit einem Gelgehalt von 0 bis 5 Gew.-% und 40 Gew.-% oder weniger eines Kautschuks mit einem Gelgehalt von 5 bis 30 Gew.-% verwendet.

Bei der Pfropfung in Lösung wird der Kautschuk in einem aliphatischen oder aromatischen Lösungsmittel wie Hexan, Benzol, Toluol oder deren Gemische gelöst. Bei der Pfropfung von Ethylen-Vinylacetat-Copolymeren werden die dafür üblichen Lösungsmittel wie tert.-Butanol verwendet. Die Kautschuklösungen haben einen Feststoffgehalt von 5 bis 20, vorzugsweise von 10 bis 12 Gew.-%. Nach Zugabe von Monomeren und Initiator und gegebenenfalls eines Reglers wird die Pfropfpolymerisation bei Temperaturen zwischen 40 und 140°C 4 bis 18 Stunden unter Rühren durchgeführt.

Als Initiatoren können z.B. Peroxide wie Dilauroylperoxid, Dibenzoylperoxid und Cumolhydroperoxid oder Ethylperhexanoat in Mengen von 1,5 bis 10, vorzugsweise von 3 bis 5 Gew.-Teilen pro 100 Gew.-Teile Kautschuk, verwendet werden. Als Regler und Pfropfhilfe kann Acrylamid in Mengen von 0,5 bis 5 Gew.-%, bezogen auf die Pfropfmonomeren, zugesetzt werden.

Durch die während der Pfropfung eintretende Vernetzung liegt der Gelgehalt des Kautschuks im Endprodukt zwischen 50 und 100 Gew.-%. Die Menge des thermoplastischen Anteils im Pfropfpolymerisat beträgt 25 bis 50, vorzugsweise 30 bis 40 Gew.-%, wovon 30 bis 90, vorzugsweise 50 bis 90 Gew.-% aufgepfropft sind. Die Pfropfäste haben einen L-Wert (in Dimethylformamid bei 25°C) von 20 bis 120, vorzugsweise von 40 bis 80 (der L-Wert entspricht $\eta$ spez./c für c = 5 g/l).

Le A 17 671

Die Zugfestigkeiten der Kautschukpfropfpolymerisate liegen zwischen 7 und 25 MPa, ihre Bruchdehnungen zwischen 200 und 500 % und ihre Shore A-Härte bei Raumtemperatur zwischen 20 und 100. Die Produkte haben u.a. den Vorteil, daß sie im Vergleich zu Dreiblockelastomeren problemloser herstellbar sind.

Die erfindungsgemäßen Pfropfpolymerisate, die sich einerseits bei Raumtemperatur wie Kautschukvulkanisate verhalten, können andererseits bei den in der Thermoplasttechnologie üblichen Temperaturen zwischen 160 und 250°C auf der Walze einwandfrei verarbeitet werden, z.T. sogar auf nicht erhitzten Walzen. Auch die Herstellung von Formteilen im Spritzgußverfahren ist problemlos. Stellt man aus einem Walzfell Preßplatten her und fertigt davon elektronenmikroskopische Aufnahmen an, so beobachtet man eine gegenüber den herkömmlichen Acrylnitril-Butadien-Styrol-Kunststoffen neuartige Morphologie mit einer regelmäßigen Verteilung diskreter Thermoplastteilchen in einer kontinuierlichen Kautschukphase, wie sie ähnlich bei Styrol-Butadien-Dreiblockelastomeren vorliegt. Im Gegensatz zur Struktur von solchen Dreiblockelastomeren oder von Abmischungen von Polypropylen mit Ethylen-Propylen-Terpolymeren liegt bei den erfindungsgemäßen Pfropfpolymerisaten sowohl eine chemische als auch eine physikalische Verknüpfung der Komponenten vor.

Die folgenden Beispiele erläutern die Erfindung. Prozentangaben sind stets Gewichtsprozent.

Le A 17 671

Beispiele

Die Pfropfpolymerisate werden nach den in den Beispielen beschriebenen Verfahren in Emulsion, in Lösung oder nach einem Lösungs-Fällungs-Verfahren hergestellt.

Bei der Durchführung in Emulsion werden nach der Pfropfung 0,5 % (bezogen auf Pfropfpolymerisat) 2,6-Di-tert.-butyl-p-kresol, dispergiert in Wasser, eingerührt und die Polymerisate dann mit 2 %iger NaCl-, $MgSO_4$- oder Essigsäurelösung bei 50°C gefällt und bei 70°C im Vakuum getrocknet.

Bei den Lösungs- bzw. Lösungs-Fällungs-Polymerisaten werden nach der Polymerisation 0,5 % des o.g. Stabilisators eingerührt, das Polymerisat dann durch Strippen von Restmonomeren und Lösungsmittel befreit und im Vakuum bei 70°C getrocknet. Alle Produkte werden bei 160 bis 220°C auf der Walze verarbeitet und die mechanischen Daten bestimmt, die in der Tabelle nach Beispiel 17 angegeben sind (DIN 53 504).

Beispiel 1

In einem 6-l-Kolben werden 3 957 g Acrylnitril-Butadien-Copolymer-Latex (33 % Acrylnitril-Gehalt, Defo-Härte 700, Feststoffgehalt 20,7 %, Teilchengröße 150 nm) vorgelegt und mit Stickstoff gespült. Anschließend wird auf 63 bis 65°C aufgeheizt und eine Lösung von 7,5 g Kaliumpersulfat in 200 ml Wasser zugegeben. Bei 63 bis 65°C läßt man innerhalb von 4 Stunden gleichzeitig zulaufen:

Le A 17 671

- 9 -

1) 280 g Methylmethacrylat und 120 g Acrylnitril,
2) 375 g Wasser und 12 g Alkylsulfat-Emulgator.

Man polymerisiert weitere 4 Stunden unter Rühren bei 63 bis 65°C, kühlt ab und filtriert.

Beispiel 2

Analog Beispiel 1, nur mit 400 g Methylmethacrylat statt des Gemisches aus 280 g Methylmethacrylat und 120 g Acrylnitril.

Beispiel 3

Analog Beispiel 1, nur mit 700 g Methylmetacrylat statt des Gemisches aus 280 g Methylmethacrylat und 120 g Acrylnitril.

Beispiel 4

In einem 6-l-Kolben werden 2677 g Acrylnitril-Butadien-Copolymer-Latex (33 % Acrylnitril-Gehalt, Defo-Härte 700, Teilchengröße 200 nm, Feststoffgehalt 20,4 %) und 1083 g Styrol-Butadien-Copolymer-Latex (24 % Styrol-Gehalt, Mooney ML-4 50, Teilchengröße 130 nm, Feststoffgehalt 25,2 %) vorgelegt, mit Stickstoff gespült und auf 63 bis 65°C aufgeheizt. Danach wird eine Lösung von 10 g Kaliumpersulfat in 300 ml Wasser zugegeben.

Innerhalb von 4 Stunden läßt man bei 63 bis 65°C gleichzeitig zulaufen:

Le A 17 671

1) 400 g Methylmethacrylat,

2) 375 g Wasser und 12 g Alkylsulfat-Emulsion.

Man polymerisiert weitere 4 Stunden bei 63 bis 65$^{O}$C unter Rühren, kühlt ab und filtriert.

Beispiel 5

In einem 6-l-Kolben werden 3315 g Styrol-Butadien-Copolymer-Latex (24 % Styrol-Gehalt, Mooney ML-4 50, Teilchengröße 200 nm, Feststoffgehalt 24,7 %) vorgelegt, mit Stickstoff gespült und auf 63 bis 65$^{O}$C aufgeheizt. Danach wird eine Lösung von 15 g Kaliumpersulfat in 300 ml Wasser zugegeben. Innerhalb von 4 Stunden läßt man bei 63 bis 65$^{O}$C gleichzeitig zulaufen:

1) 435 g Styrol,

2) 42,75 g disproportionierte Abietinsäure (Na-Salz, 70 %),

22 g 1-n-Natronlauge und 375 g Lewatitwasser.

Man polymerisiert weitere 4 Stunden bei 63 bis 65$^{O}$C unter Rühren, kühlt ab und filtriert.

Beispiel 6

In einem 6-l-Kolben werden 2677 g Acrylnitril-Butadien-Copolymer-Latex (33 % Acrylnitril-Gehalt, Defo-Härte 700, Teilchengröße 200 nm, Feststoffgehalt 20,4 %) und 1000 g Polyubtadienlatex (20 % Gel-Gehalt, $\eta$ = 3,0 dl/g, Feststoffgehalt 26 %, Teilchengröße 250 nm) vorgelegt, mit Stickstoff gespült und auf 63 bis 65°C aufgeheizt. Danach wird eine Lösung von 10 g Kaliumpersulfat
in 300 ml Wasser zugegeben. Innerhalb von 4 Stunden läßt
man bei 63 bis 65°C gleichzeitig zulaufen:

1) 400 g Methylmethacrylat,
2) 375 g Wasser und 12 g Alkylsulfat-Emulgator.

Man polymerisiert weitere 4 Stunden bei 63 bis 65°C unter
Rühren, kühlt ab und filtriert.

Beispiel 7

Analog Beispiel 4, nur statt 2677 g Acrylnitril-Butadien-
Copolymer-Latex jetzt 2526 g Polybutadien-Latex ( $\eta$ = 2,0
dl/g, Teilchengröße 240 nm, Feststoffgehalt 21,0 %).

Beispiel 8

Zu einer Lösung von 432 g Ethylen-Vinylacetat-Copolymer
(40% Vinylacetat-Gehalt) in 3240 ml tert.-Butanol wird
bei Raumtemperatur eine Lösung von 4,0 g tert.-Butylperpivalat in 100 ml tert.-Butanol gegeben und auf 60°C
aufgeheizt. Dann werden innerhalb von 2 Stunden 428 g
Methylmethacrylat und 23 g Acrylamid, gelöst in 350 ml
tert.-Butanol, zugetropft. Danach wird 4 Stunden bei 60°C
und 8 Stunden bei 80°C unter Rühren weiterpolymerisiert.
Die entstandene Dispersion wird mit iso-Propanol gefällt.

Beispiel 9

In einem 6-l-Kolben werden 432 g Ethylen-Vinylacetat-

Le A 17 671

Copolymer (40 % Vinylacetat-Gehalt) in 3240 ml tert.-Butanol gelöst und dann bei 60$^O$C innerhalb von 2 Stunden eine Lösung von 427,5 g Styrol, 22,5 g Acrylamid und 3,6 g tert.-Butylperpivalat in 450 ml tert.-Butanol zugetropft. Danach wird 4 Stunden bei 60$^O$C und 8 Stunden bei 80$^O$C unter Rühren weiterpolymerisiert. Die entstandene Dispersion wird mit iso-Propanol gefällt.

Beispiel 10

Analog Beispiel 9 mit 427,5 g Methylmethacrylat statt 427,5 g Styrol.

Beispiel 11

Zu einer Lösung von 1,5 kg Ethylen-Propylen-Terpolymer (Termonomer: Ethylidennorbornen, 50 % Ethylen-Gehalt, Mooney ML 1+4, 100$^O$C = 90) in 26 kg n-Hexan werden 2,25 kg Methylmethacrylat, 0,25 kg Acrylamid sowie eine Lösung von 0,1 kg Dibenzoylperoxid in 0,7 kg Toluol gegeben und 18 Stunden bei 60$^O$C unter Rühren polymerisiert.

Beispiel 12

Zu einer Lösung von 1,8 kg eines Ethylen-Propylen-Terpolymers wie in Beispiel 11 (50 % Ethylen-Gehalt, Mooney ML 1+4, 100$^O$C = 85) in 30 kg n-Hexan werden eine Lösung von 0,1 kg Ethylperhexanoat in 1 kg n-Hexan sowie 1,2 kg Acrylnitril und 0,8 kg Styrol gegeben und 18 Stunden bei 70$^O$C unter Rühren polymerisiert.

Le A 17 671

Beispiel 13

Zu einer Lösung von 1,8 kg eines Ethylen-Propylen-Terpolymers wie in Beispiel 12 in 30 kg Hexan werden eine
Lösung von 0,18 kg Dilauroylperoxid in 2 kg n-Hexan sowie 1,5 kg Acrylnitril und 1,0 kg Styrol gegeben und 10
Stunden bei 70°C unter Rühren polymerisiert.

Beispiel 14

Zu einer Lösung von 1,8 kg eines Ethylen-Propylen-Terpolymers wie in Beispiel 12 in 30 kg n-Hexan werden
eine Lösung von 0,1 kg Ethylperhexanoat in 1,0 kg n-
Hexan sowie eine Lösung von 0,015 kg tert.-Dodecylmercaptan in 1,0 kg n-Hexan und 1,2 kg Acrylnitril gegeben
und 18 Stunden bei 70°C unter Rühren polymerisiert.

Beispiel 15

Zu einer Lösung von 1,8 kg cis-1,4-Polybutadien ( $\eta$ = 2,4
dl/g)in 25 kg Toluol werden eine Lösung von 0,09 kg Benzoylperoxid in 0,7 kg Toluol sowie 2,375 kg Styrol und
0,125 kg Acrylamid gegeben und 18 Stunden bei 70°C unter
Rühren polymerisiert.

Beispiel 16

Zu einer Lösung von 1,8 kg cis-1,4-Polybutadien ( $\eta$ = 2,4
dl/g) in 25 kg Toluol werden eine Lösung von 0,076 kg
Cumolhydroperoxid in 0,2 kg Toluol sowie 2,375 kg Methyl-

Le A 17 671

- 14 -

methacrylat und 0,125 kg Acrylamid gegeben und 14 Stunden bei 120°C unter Rühren polymerisiert.

Beispiel 17

Zu der Lösung eines Gemisches aus 0,8 kg Ethylen-Propylen-Terpolymer (Termonomer:Ethylidennorbornen, 50 % Ethylen-Gehalt, Mooney ML 1+4, 100°C = 85) und 1 kg cis-1,4-Polybutadien ( $\eta$ = 2,4 dl/g) in 25 kg Toluol werden eine Lösung von 0,076 kg Cumolhydroperoxid in 0,2 kg Toluol sowie 2,375 kg Methylmethacrylat und 0,125 kg Acrylamid gegeben und 14 Stunden bei 120°C unter Rühren polymerisiert.

Tabelle

| Beispiel Nr. | % Styrol | % Methyl-methacrylat | % Acryl-nitril | % Kautschuk 1 | % Kautschuk 2 | Zug-festig-keit (MPa) | Bruch-dehnung (%) | Struktur-festigkeit (N) | Shore A 23/70°C |
|---|---|---|---|---|---|---|---|---|---|
| 1 | – | 22 | 10 | 68 AB[a] | – | 11 | 350 | 180 | 77/53 |
| 2 | – | 33 | – | 67 AB | – | 13,8 | 345 | 280 | 86/67 |
| 3 | – | 45 | – | 55 AB | – | 23,7 | 240 | 760 | 96/93 |
| 4 | – | 33 | – | 45 AB | 22 SB[b] | 15,1 | 400 | 325 | 81/74 |
| 5 | 50 | – | – | 50 SB | – | 12,5 | 415 | 180 | 70/50 |
| 6 | – | 30 | – | 48,5 AB | 21,5 PB[c] | 14,5 | 450 | 180 | 70/50 |
| 7 | – | 33 | – | 45 PB | 22 SB | 14,1 | 480 | 170 | 60/45 |
| 8 | – | 38 | – | 62 EVAC[d] | – | 11,0 | 450 | 150 | 60/14 |
| 9 | 40 | – | – | 60 EVAC | – | 12,5 | 220 | 200 | 95/78 |
| 10 | – | 38 | – | 62 EVAC | – | 14,0 | 400 | 190 | 62/17 |
| 11 | – | 50 | – | 50 EPDM[e] | – | 13,7 | 220 | 350 | 96/95 |
| 12 | 19 | – | 31 | 50 EPDM | – | 14,1 | 245 | 240 | 89/56 |
| 13 | 20 | – | 35 | 45 EPDM | – | 10,3 | 510 | 265 | 80/39 |
| 14 | – | – | 40 | 60 EPDM | – | 12,5 | 475 | 300 | 82/53 |
| 15 | 30 | – | – | 70 PB | – | 12 | 420 | 170 | 57/40 |
| 16 | – | 50 | – | 50 PB | – | 12,7 | 365 | 190 | 72/55 |
| 17 | – | 50 | – | 30 PB | 20 EPDM | 13,8 | 290 | 240 | 89/56 |

<u>Erklärungen zur Tabelle:</u>

a) AB = Acrylnitril-Butadien-Copolymerisat

b) SB = Styrol-Butadien-Copolymerisat

c) PB = Polybutadien

d) EVAC = Ethylen-Vinylacetat-Copolymerisat

e) EPDM = Ethylen-Propylen-Terpolymerisat

<u>Le A 17 671</u>

Patentansprüche

1) Thermoplastisch-elastomere Pfropfpolymerisate aus

   a) 50 bis 75 Gew.-% eines unvernetzten Kautschuks als Pfropfbasis, der während der Pfropfung zu 50 bis 100 Gew.-% vernetzt wird, und

   b) 25 bis 50 Gew.-% eines Thermoplastanteils aus polymerisierten Einheiten eines Vinylaromaten, eines Alkylmethacrylats oder Acrylnitril oder deren Gemische, die zu 30 bis 90 Gew.-% aufgepfropft sind.

2) Pfropfpolymerisate nach Anspruch 1 aus

   a) einem Kautschukanteil von 60 bis 70 Gew.-% und

   b) einem Thermoplastanteil von 30 bis 40 Gew.-%.

3) Pfropfpolymerisate nach Anspruch 1 und 2, dadurch gekennzeichnet, daß als Pfropfbasis Polybutadien, Acrylnitril-Butadien-Copolymere, Styrol-Butadien-Copolymere, Ethylen-Propylen-Terpolymere oder deren Gemische oder Ethylen-Vinylacetat-Copolymere verwendet werden.

4) Pfropfpolymerisate nach Anspruch 1 bis 3, dadurch gekennzeichnet, daß als Pfropfbasis

   a) mindestens 60 Gew.-% eines Kautschuks mit einem Gelgehalt von 0 bis 5 Gew.-% und

   b) höchstens 40 Gew.-% eines Kautschuks mit einem Gelgehalt von 5 bis 30 Gew.-% verwendet werden.

Le A 17 671

5) Pfropfpolymerisate nach Anspruch 1 bis 3, dadurch gekennzeichnet, daß als Pfropfbasis

a) 10 bis 90 Gew.-% eines Styrol-Butadien-Copolymeren und

b) 10 bis 90 Gew.-% eines Acrylnitril-Butadien-Copolymeren verwendet werden.

6) Pfropfpolymerisate nach Anspruch 1 bis 3, dadurch gekennzeichnet, daß als Pfropfbasis

a) 10 bis 90 Gew.-% Polybutadien und

b) 10 bis 90 Gew.-% eines Ethylen-Propylen-Terpolymeren verwendet werden.

7) Pfropfpolymerisate nach Anspruch 1 bis 6, dadurch gekennzeichnet, daß als Pfropfmonomere Styrol und/oder Methylmethacrylat verwendet werden.

8) Pfropfpolymerisate nach Anspruch 1 bis 6, dadurch gekennzeichnet, daß als Pfropfmonomere Styrol, Methylmethacrylat und Acrylnitril oder deren Gemische verwendet werden.

9) Pfropfpolymerisate nach Anspruch 1 und 2, dadurch gekennzeichnet, daß als Pfropfbasis ein Ethylen-Vinylacetat-Copolymer und als Pfropfmonomere Styrol und/oder Methylmethacrylat verwendet werden und die Pfropfung in tert.-Butanol als Lösungs-Fällungs-Polymerisation durchgeführt wird.

Le A 17 671

10) Pfropfpolymerisate nach Anspruch 1 und 2, dadurch gekennzeichnet, daß als Pfropfbasis ein Ethylen-Propylen-Terpolymer und als Pfropfmonomere Styrol, Methylmethacrylat und Acrylnitril oder deren Gemische verwendet werden und die Pfropfung in n-Hexan als Lösungs-Fällungs-Polymerisation durchgeführt wird.

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | US - A - 3 935 136 (C.W. CHILDERS et al.)<br><br>* Claims 1,5; Seite 1, Zeilen 58-68; Seite 2, Zeilen 1-56 *<br><br>-- | 1-8,10 | C 08 F 291/02//<br>(C 08 F 291/02<br>212/04<br>220/12<br>220/44) |
| | DE - A - 1 958 451 (VEB LEUNA WERKE)<br><br>* Ansprüche 1,2,4 *<br><br>---- | 1,7-9 | |

RECHERCHIERTE SACHGEBIETE (Int. Cl. 3)

C 08 F 291/02
279/02
255/02

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-03-1980 | PEETERS J.C.J.J. |

EPA form 1503.1  06.78